# EUROPÄISCHE PATENTANMELDUNG

(11) **EP 3 081 779 A1**
(43) Veröffentlichungstag der Anmeldung: **19.10.2016**
(21) Anmeldenummer: 15163488.8
(22) Anmeldetag: 14.04.2015
(51) Int. Cl.: F02C 3/06, F04D 29/52, F04D 29/68

(54) **GASTURBINENVERDICHTER-ARBEITSSTRÖMUNGSKANALELEMENT**

(71) Anmelder: MTU Aero Engines AG, 80995 München (DE)
(72) Erfinder: Liebl, Christian, 85461 Bockhorn (DE); Scharl, Richard, 85757 Karlsfeld (DE); Buck, Alexander, 80997 München (DE); Kirchner, Daniel, 80639 München (DE); Heß, Thomas, 81541 München (DE)

(57) **Zusammenfassung**

Die vorliegende Erfindung betrifft ein generativ hergestelltes Arbeitsströmungskanalelement (10) für einen Gasturbinenverdichter mit wenigstens einer drehbar gelagerten Laufschaufel (30), das eine integral ausgebildete Rückströmungskanalanordnung mit wenigstens einem Rückströmungskanal (11) mit einem arbeitsstromabwärtigen Eintrittsquerschnitt (12) und einem arbeitsstromaufwärtigen Austrittsquerschnitt (13) aufweist, wobei der Eintrittsquerschnitt (12) zwischen einer Vorder- und einer Hinterkante (31, 32) einer Schaufelspitze (33) der Laufschaufel (30) angeordnet ist und/oder ein Wandabstand (d), insbesondere Durchmesser, des Rückströmungskanals (11) höchstens 2 mm beträgt.

## Beschreibung

Die vorliegende Erfindung betrifft ein generativ hergestelltes Arbeitsströmungskanalelement für einen Gasturbinenverdichter, einen Gasturbinenverdichter mit dem Arbeitsströmungskanalelement sowie ein Verfahren zum Herstellen des Arbeitsströmungskanalelements.

Bei Gasturbinenverdichtern kann es zu einem unerwünschten zeitweisen Rückströmen von Gas entgegen einer Verdichtungs- bzw. Arbeitsstromrichtung, dem sogenannten (Verdichter)Pumpen, kommen.

Aus betriebsinterner Praxis ist es hierzu bekannt, bereits verdichtetes Gas teilweise rück- und dem Arbeitsstrom vor den Laufschaufeln wieder zuzuführen.

Eine Aufgabe einer Ausführung der vorliegenden Erfindung ist es, einen Gasturbinenverdichter, dessen Betrieb und/oder Herstellung zu verbessern.

Diese Aufgabe wird durch ein Arbeitsströmungskanalelement mit den Merkmalen des Anspruchs 1 gelöst. Ansprüche 12, 15 stellen einen Gasturbinenverdichter mit einem hier beschriebenen Arbeitsströmungskanalelement bzw. ein Verfahren zum Herstellen eines hier beschriebenen Arbeitsströmungskanalelements unter Schutz. Vorteilhafte Ausführungsformen der Erfindung sind Gegenstand der Unteransprüche.

Nach einem Aspekt der vorliegenden Erfindung weist ein Verdichter für eine Gasturbine, insbesondere Flugtriebwerk-Gasturbine, insbesondere ein Verdichter einer Gasturbine, insbesondere Flugtriebwerk-Gasturbine, einen Arbeitsstromkanal auf, in dem ein oder mehrere drehbar gelagerte Laufschaufeln angeordnet sind, um Gas, insbesondere Luft, das den Arbeitsstromkanal in einer Arbeitsstromrichtung durchströmt, zu verdichten.

Insbesondere, um einen Teil des bereits teilweise verdichteten Gases wieder rückzuführen und dem Arbeitsstrom vor den Laufschaufeln wieder zuzuführen, weist ein generativ hergestelltes Arbeitsströmungskanalelement nach einem Aspekt der vorliegenden Erfindung eine integral ausgebildete bzw. mit dem restlichen Arbeitsströmungskanalelement gemeinsam generativ hergestellte Rückströmungskanalanordnung mit einem oder mehreren Rückströmungskanälen auf, die jeweils einen in Arbeitsstromlichtung gesehen stromabwärtigen bzw. arbeitsstromabwärtigen Eintrittsquerschnitt und einen in Arbeitsstromrichtung gesehen stromaufwärtigen bzw. arbeitsstromaufwärtigen Austrittsquerschnitt aufweisen, die mit dem Arbeitsstromkanal kommunizieren, insbesondere in diesen (unmittelbar) münden. In einer Ausführung erstrecken sich der bzw. ein Rückströmungskanal oder mehrere, insbesondere alle Rückströmungskanäle der Rückströmungskanalanordnung bzw. des Arbeitsströmungskanalelements (jeweils) zwischen Ein- und Austrittsquerschnitt bzw. (nur) von dem Ein- zu dem Austrittsquerschnitt.

Nach einem Aspekt der vorliegenden Erfindung ist der Eintrittsquerschnitt des bzw. eines Rückströmungskanals oder mehrerer, insbesondere aller Rückströmungskanäle der Rückströmungskanalanordnung bzw. des Arbeitsströmungskanalelements in axialer Richtung (jeweils) zwischen einer (arbeitsstromaufwärtigen) Vorderkante und einer (arbeitsstromabwärtigen) Hinterkante einer Schaufelspitze der Laufschaufel(n) angeordnet, insbesondere in einer Einbaulage des Arbeitsströmungskanalelements bzw. bei in dem Gasturbinenverdichter angeordneten Arbeitsströmungskanalelement.

Hierdurch kann vorteilhaft bereits teilweise verdichtetes Gas in dem durch die Laufschaufeln gebildeten Laufgitter abgezapft und von dem Laufgitter wieder zugeführt werden. Dadurch kann insbesondere eine sogenannte Pumpgrenze des Gasturbinenverdichters verbessert werden.

Nach einem weiteren Aspekt der vorliegenden Erfindung, der insbesondere vorteilhaft mit dem vorstehend erläuterten Aspekt des bzw. der axial zwischen Vorder- und Hinterkante angeordneten Eintrittsquerschnitt(e) kombiniert sein kann, beträgt ein, insbesondere minimaler, maximaler oder gemittelter bzw. durchschnittlicher, Wandabstand, insbesondere zwischen einander radial bzw. quer zur Rückströmungskanal(längs)achse gegenüberliegenden Wänden, insbesondere ein minimaler, maximaler oder gemittelter Durchmesser, des bzw. eines Rückströmungskanals oder mehrerer, insbesondere aller Rückströmungskanäle der Rückströmungskanalanordnung bzw. des Arbeitsströmungskanalelements, höchstens 2 mm, insbesondere höchstens 1,5 mm, insbesondere höchstens 1,2 mm, insbesondere höchstens 1,0 mm.

Durch solche kleinen Kanäle kann in einer Ausführung vorteilhaft die Aero- und/oder Thermodynamik verbessert, insbesondere aerodynamische Verluste reduziert, und so die Leistung, insbesondere der Wirkungsgrad des Gasturbinenverdichters verbessert werden.

In einer Ausführung ist der Eintrittsquerschnitt des bzw. eines Rückströmungskanals oder mehrerer, insbesondere aller Rückströmungskanäle der Rückströmungskanalanordnung bzw. des Arbeitsströmungskanalelements (jeweils) in einem Axialbereich des Arbeitsstromkanals angeordnet, der sich ausgehend von der Vorderkante der Schaufelspitze arbeitsstromabwärts bzw. zur Hinterkante hin über höchstens 75%, insbesondere höchstens 60%, einer Sehnenlänge bzw. eines axialen Abstandes zwischen Vorder- und Hinterkante der Schaufelspitze erstreckt.

Durch eine solche vorderkantennähere bzw. -nahe Abzapfung können in einer Ausführung die Pumpgrenze weiter verbessert und/oder aerodynamische Verluste weiter reduziert werden.

In einer Ausführung ist der Austrittsquerschnitt des bzw. eines Rückströmungskanals oder mehrerer, insbesondere aller Rückströmungskanäle der Rückströmungskanalanordnung bzw. des Arbeitsströmungskanalelements (jeweils) in einem Axialbereich angeordnet, der sich ausgehend von der Vorderkante der Schaufelspitze arbeitsstromaufwärts bzw. von der Hinterkante weg über höchstens 75%, insbesondere höchstens 60%, einer Sehnenlänge bzw. eines axialen Abstandes zwischen Vorderund Hinterkante der Schaufelspitze erstreckt.

Durch eine solche vorderkantennähere bzw. -nahe Zuführung können in einer Ausführung die Pumpgrenze weiter verbessert und/oder aerodynamische Verluste weiter reduziert werden.

In einer Ausführung beträgt ein, insbesondere minimaler, maximaler oder gemittelter bzw. durchschnittlicher, Wandabstand, insbesondere zwischen einander radial bzw. quer zur Rückströmungskanal(längs)achse gegenüberliegenden Wänden, insbesondere ein minimaler, maximaler oder gemittelter Durchmesser, des bzw. eines Rückströmungskanals oder mehrerer, insbesondere aller Rückströmungskanäle der Rückströmungskanalanordnung bzw. des Arbeitsströmungskanalelements (jeweils) wenigstens 0,5 mm, insbesondere wenigstens 0,6 mm, insbesondere wenigstens 0,65 mm.

Durch eine solche Untergrenze kann in einer Ausführung vorteilhaft die Aero- und/oder Thermodynamik und/oder Herstellung verbessert werden.

In einer Ausführung varriert der durchströmbare Querschnitt des bzw. eines Rückströmungskanals oder mehrerer, insbesondere aller Rückströmungskanäle der Rückströmungskanalanordnung bzw. des Arbeitsströmungskanalelements (jeweils) über einer Rückströmungskanallänge, insbesondere stetig bzw. absatzfrei.

Hierdurch kann in einer Ausführung die Rückströmung beschleunigt und/oder verzögert und so in einer Ausführung eine vorteilhafte autonome bzw. selbstregulierende Rückströmung dargestellt werden.

In einer Ausführung konvergiert der bzw. ein Rückströmungskanal oder mehrere, insbesondere alle Rückströmungskanäle der Rückströmungskanalanordnung bzw. des Arbeitsströmungskanalelements (jeweils) ausgehend von dem Eintrittsquerschnitt, insbesondere über wenigstens 1% und/oder höchstens 10% einer Rückströmungskanallänge. Ein solcher größerer durchströmbarer Querschnitt am Austritt kann insbesondere aerodynamisch vorteilhaft sein, insbesondere, um rückgeführtes Gas beim Austritt stärker zu verteilen und/oder zu verzögern und so seinen Druck (weiter) zu erhöhen.

Gleichermaßen kann in einer Ausführung der bzw. ein Rückströmungskanal oder mehrere, insbesondere alle Rückströmungskanäle der Rückströmungskanalanordnung bzw. des Arbeitsströmungskanalelements (jeweils) ausgehend von dem Eintrittsquerschnitt, insbesondere über wenigstens 1% und/oder höchstens 10% einer Rückströmungskanallänge, divergieren. Ein solcher kleinerer durchströmbarer Querschnitt am Austritt kann ebenfalls insbesondere aerodynamisch vorteilhaft sein, insbesondere, um rückgeführtes Gas beim Austritt zu beschleunigen und so weiter in den Arbeitsstrom einzublasen.

Zusätzlich oder alternativ konvergiert in einer Ausführung der bzw. ein Rückströmungskanal oder mehrere, insbesondere alle Rückströmungskanäle der Rückströmungskanalanordnung bzw. des Arbeitsströmungskanalelements (jeweils) ausgehend von dem Austrittsquerschnitt, insbesondere über wenigstens 1% und/oder höchstens 10% einer Rückströmungskanallänge. Ein solcher größerer durchströmbarer Querschnitt am Eintritt kann insbesondere aerodynamisch vorteilhaft sein, insbesondere, um mehr Gas rückzuführen.

Gleichermaßen kann in einer Ausführung der bzw. ein Rückströmungskanal oder mehrere, insbesondere alle Rückströmungskanäle der Rückströmungskanalanordnung bzw. des Arbeitsströmungskanalelements (jeweils) ausgehend von dem Austrittsquerschnitt, insbesondere über wenigstens 1% und/oder höchstens 10% einer Rückströmungskanallänge, divergieren. Ein solcher kleinerer durchströmbarer Querschnitt am Eintritt kann ebenfalls insbesondere aerodynamisch vorteilhaft sein, insbesondere, um rückgeführtes Gas im Rückströmkanal zu verzögern.

In einer Ausführung weist eine Kanalwand, insbesondere eine radial innere Kanalwand und/oder eine radial äußere Kanalwand, des bzw. eines Rückströmungskanals oder mehrerer, insbesondere aller Rückströmungskanäle der Rückströmungskanalanordnung bzw. des Arbeitsströmungskanalelements (jeweils) zwischen dem Ein- und Austrittsquerschnitt wenigstens eine lokale Erhebung und/oder wenigstens eine Vertiefung auf. Hierdurch kann in einer Ausführung vorteilhaft die Rückströmung lokal umgelenkt und so variiert werden.

In einer Ausführung weisen der bzw. ein Rückströmungskanal oder mehrere, insbesondere aller Rückströmungskanäle der Rückströmungskanalanordnung bzw. des Arbeitsströmungskanalelements (jeweils) über seiner gesamten Rückströmungskanallänge zwischen Ein- und Austrittsquerschnitt oder nur auf einem oder mehreren Abschnitten der Rückströmungskanallänge jeweils mehrere, insbesondere untereinander verbundene, Querstreben, insbesondere eine gitter- oder schwammartige Struktur, auf. Hierdurch kann in einer Ausführung eine Rückströmung vorteilhaft gedrosselt werden.

In einer Ausführung kommunizieren mehrere der Rückströmungskanäle über Querkanäle strömungstechnisch miteinander. Hierdurch können vorteilhaft lokal bzw. über den Umfang ungleichförmige Drücke wenigstens teilweise, insbesondere autonom, kompensiert werden.

In einer Ausführung definiert bzw. bildet das Arbeitsströmungskanalelement wenigstens abschnittsweise eine, insbesondere radial äußere, Kanalwand des Arbeitsstromkanals. Mit anderen Worten liegt in einer Ausführung eine arbeitsströmungskanalseitige Oberfläche des Arbeitsströmungskanalelements der bzw. den Schaufelspitze(n) der Laufschaufel(n) direkt bzw. unmittelbar gegenüber, insbesondere in einer Einbaulage des Arbeitsströmungskanalelements bzw. bei in dem Gasturbinenverdichter angeordneten Arbeitsströmungskanalelemente. Hierdurch kann die Rückströmungskanalanordnung vorteilhaft dicht an den Schaufelspitzen angeordnet sein.

In einer Ausführung ist das Arbeitsströmungskanalelement voll- oder teil-, insbesondere halbringartig ausgebildet bzw. erstreckt sich in Umfangsrichtung (vollringartig) über 360° oder (teilringartig) über weniger als 360°, insbesondere (halbringartig) über, wenigstens im Wesentlichen, 180°. Hierdurch kann es vorteilhaft gehandhabt, insbesondere montiert werden.

In einer Ausführung ist bzw. wird das Arbeitsströmungskanalelement, insbesondere lösbar oder dauerhaft, mit einem Gehäuse des Gasturbinenverdichters verbunden, insbesondere form-, reib- und/oder stoffschlüssig.

In einer Ausführung beträgt ein radialer Absatz zwischen einer arbeitsströmungskanalseitigen, insbesondere eine, insbesondere radial äußere, Kanalwand des Arbeitsstromkanals definierenden bzw. bildenden, Oberfläche des Arbeitsströmungskanalelements und einer axial angrenzenden arbeitsströmungskanalseitigen, insbesondere eine, insbesondere radial äußere, Kanalwand des Arbeitsstromkanals definierenden bzw. bildenden, Oberfläche des Gehäuses höchstens 0,1 mm, insbesondere höchstens 0,05 mm. Durch einen solchen geringen radialen, vorzugsweise verschwindenden, radialen Absatz kann die Aerodynamik verbessert werden.

Zum Herstellen eines hier beschriebenen Arbeitsströmungskanalelements, insbesondere zum integralen Ausbilden der Rückströmungskanalanordnung mit den axial zwischen Vorder- und Hinterkante angeordneten Eintrittsöffnungen nach dem einen Aspekt und/oder Querschnitten nach dem anderen Aspekt, ist ein generatives bzw. additives Herstellungsverfahren besonders vorteilhaft.

Entsprechend werden bzw. sind nach einem Aspekt der vorliegenden Erfindung das bzw. die hier beschriebenen Arbeitsströmungskanalelemente mit ihren integral ausgebildeten Rückströmungskanalanordnungen zusammen generativ bzw. additiv hergestellt, insbesondere durch lokales schichtweises, insbesondere optisches, thermisches und/oder chemisches, Verfestigen von verfestigbarem, insbesondere flüssigem oder schüttbarem, insbesondere körnigem oder pulverförmigem, Ausgangsmaterial.

In einer Ausführung arbeitet die Rückströmungskanalanordnung vorteilhaft autonom bzw. selbstregulierend. Entsprechend weist die Rückströmungskanalanordnung in einer Ausführung keine in oder an dem bzw. den Rückströmungskanälen angeordneten, verstellbaren Ventile zum Verändern einer Rückströmung durch die Rückströmungskanäle auf.

In einer Ausführung weisen der bzw. ein Rückströmungskanal oder mehrere, insbesondere alle Rückströmungskanäle der Rückströmungskanalanordnung bzw. des Arbeitsströmungskanalelements (jeweils) über seiner gesamten Rückströmungskanallänge zwischen Ein- und Austrittsquerschnitt oder nur auf einem oder mehreren Abschnitten der Rückströmungskanallänge einen, wenigstens im Wesentlichen, kreisförmigen Querschnitt auf.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert, die einzige:

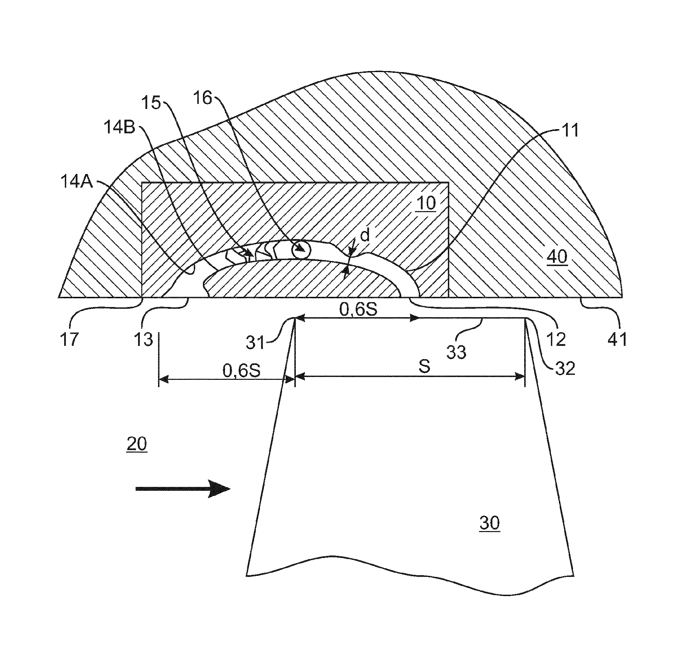

- Fig. 1: ein generativ hergestelltes Arbeitsströmungskanalelement eines Gasturbinenverdichters nach einer Ausführung der vorliegenden Erfindung.

Fig. 1 zeigt ein generativ hergestelltes Arbeitsströmungskanalelement 10 eines Gasturbinenverdichters nach einer Ausführung der vorliegenden Erfindung in einem Axialschnitt.

Der Gasturbinenverdichter weist einen Arbeitsstromkanal 20 auf, in dem mehrere drehbar gelagerte Laufschaufeln 30 angeordnet sind, um Gas, das den Arbeitsstromkanal in einer durch einen Pfeil angedeuteten Arbeitsstromrichtung durchströmt, zu verdichten.

Das generativ hergestellte Arbeitsströmungskanalelement 10 weist eine integral ausgebildete bzw. mit dem restlichen Arbeitsströmungskanalelement gemeinsam generativ hergestellte Rückströmungskanalanordnung mit mehreren Rückströmungskanälen 11 auf, von denen im Axialschnitt der Fig. 1 einer geschnitten ist, und die jeweils einen in Arbeitsstromrichtung (von links nach rechts in Fig. 1) gesehen stromabwärtigen bzw. arbeitsstromabwärtigen Eintrittsquerschnitt 12 (rechts in Fig. 1) und einen in Arbeitsstromrichtung gesehen stromaufwärtigen bzw. arbeitsstromaufwärtigen Austrittsquerschnitt 13 (links in Fig. 1) aufweisen, die unmittelbar in den Arbeitsstromkanal 10 münden.

Die Eintrittsquerschnitte der Rückströmungskanäle sind in der Einbaulage in axialer Richtung (horizontal in Fig. 1) zwischen einer (arbeitsstromaufwärtigen) Vorderkante 31 (links in Fig. 1) und einer (arbeitsstromabwärtigen) Hinterkante 32 (rechts in Fig. 1) einer Schaufelspitze 33 der Laufschaufeln 30 angeordnet.

Ein minimaler Wandabstand d zwischen einander radial bzw. quer zur Rückströmungskanal(längs)achse gegenüberliegenden Wänden 14A, 14B der Rückströmungskanäle beträgt jeweils höchstens 1,2 mm und wenigstens 0,65 mm.

Die Eintrittsquerschnitte 12 sind in einem Axialbereich des Arbeitsstromkanals 20 angeordnet, der sich ausgehend von der Vorderkante 31 der Schaufelspitze 33 arbeitsstromabwärts bzw. zur Hinterkante 32 hin (nach rechts in Fig. 1) über höchstens 60% einer Sehnenlänge S bzw. eines axialen Abstandes zwischen Vorder- und Hinterkante 31, 32 der Schaufelspitze 33 erstreckt.

Die Austrittsquerschnitte sind in einem Axialbereich angeordnet, der sich ausgehend von der Vorderkante 31 der Schaufelspitze 33 arbeitsstromaufwärts (nach links in Fig. 1) bzw. von der Hinterkante 32 weg über höchstens 60% der Sehnenlänge S erstreckt.

Die Rückströmungskanäle konvergieren ausgehend von ihrem jeweiligen Austrittsquerschnitt 13 über wenigstens 1% und höchstens 10% einer Rückströmungskanallänge (nach rechts in Fig. 1).

Die radial äußere Kanalwand 14A der Rückströmungskanäle weist jeweils zwischen dem Ein- und Austrittsquerschnitt 12, 13 eine lokale Erhebung auf, die den minimalen Wandabstand d definiert.

Die Rückströmungskanäle weisen jeweils in einem Abschnitt der Rückströmungskanallänge eine schwammartige Struktur 15 auf.

Die Rückströmungskanäle 11 kommunizieren über Querkanäle 16 miteinander.

Das Arbeitsströmungskanalelement 10 definiert bzw. bildet abschnittsweise eine radial äußere Kanalwand des Arbeitsstromkanals 20. Mit anderen Worten liegt eine arbeitsströmungskanalseitige Oberfläche (unten in Fig. 1) des Arbeitsströmungskanalelements 10 den Schaufelspitzen 33 der Laufschaufeln 30 radial unmittelbar gegenüber.

Die arbeitsströmungskanalseitige Oberfläche 17 des Arbeitsströmungskanalelements 10 fluchtet mit einer axial angrenzenden arbeitsströmungskanalseitigen, Oberfläche 41 des Gehäuses 40, die die radial äußere Kanalwand des Arbeitsstromkanals 20 mit definiert bzw. bildet. Entsprechend beträgt ein radialer Absatz zwischen diesen Oberflächen höchstens 0,05 mm.

Das Arbeitsströmungskanalelement 10 ist bzw. wird zusammen der integral ausgebildeten Rückströmungskanalanordnung generativ bzw. additiv hergestellt.

Es ist halbringartig ausgebildet bzw. erstreckt sich in Umfangsrichtung über wenigstens im Wesentlichen 180°. Das Arbeitsströmungskanalelement 10 ist lösbar oder dauerhaft mit einem Gehäuse 40 des Gasturbinenverdichters verbunden, insbesondere form-, reib- und/oder stoffschlüssig. Ein identisches zweites Arbeitsströmungskanalelement (nicht dargestellt) ist in Umfangsrichtung benachbart angeordnet, um gemeinsam einen Vollring mit einer Rückströmungskanalanordnung (aus)zubilden.

Die Rückströmungskanalanordnung weist keine in oder an dem bzw. den Rückströmungskanälen 11 angeordneten verstellbaren Ventile zum Verändern einer Rückströmung durch die Rückströmungskanäle auf.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 10: Arbeitsströmungskanalelement
- 11: Rückströmungskanal(anordnung)
- 12: Eintrittsquerschnitt
- 13: Austrittsquerschnitt
- 14A: radial äußere Wand
- 14B: radial innere Wand
- 15: Schwammstruktur
- 16: Querkanal
- 17: arbeitsströmungskanalseitige Oberfläche des Arbeitsströmungskanalelements
- 20: Arbeitsstromkanal
- 30: Laufschaufel
- 31: Vorderkante
- 32: Hinterkante
- 33: Schaufelspitze
- 40: Gehäuse des Gasturbinenverdichters
- 41: Oberfläche des Gehäuses

- d: minimaler Wandabstand
- S: Sehnenlänge

## Patentansprüche

1. Generativ hergestelltes Arbeitsströmungskanalelement (10) für einen Gasturbinenverdichter mit wenigstens einer drehbar gelagerten Laufschaufel (30), das eine integral ausgebildete Rückströmungskanalanordnung mit wenigstens einem Rückströmungskanal (11) mit einem arbeitsstromabwärtigen Eintrittsquerschnitt (12) und einem arbeitsstromaufwärtigen Austrittsquerschnitt (13) aufweist, wobei ein Wandabstand (d) des Rückströmungskanals (11) höchstens 2 mm beträgt und/oder der Eintrittsquerschnitt (12) zwischen einer Vorder- und einer Hinterkante (31, 32) einer Schaufelspitze (33) der Laufschaufel (30) angeordnet ist.

2. Arbeitsströmungskanalelement nach dem vorhergehenden Anspruch, **dadurch gekennzeichnet, dass** ein Wandabstand (d) des Rückströmungskanals wenigstens 0,5 mm beträgt.

3. Arbeitsströmungskanalelement nach einem der vorhergehenden Ansprüche, **dadurch gekennzeichnet, dass** der Eintrittsquerschnitt (12) in einem Axialbereich angeordnet ist, der sich ausgehend von der Vorderkante (31) der Schaufelspitze (33) arbeitsstromabwärts über höchstens 75% einer Sehnenlänge (S) der Schaufelspitze erstreckt.

4. Arbeitsströmungskanalelement nach einem der vorhergehenden Ansprüche, **dadurch gekennzeichnet, dass** der Austrittsquerschnitt (13) in einem Axialbereich angeordnet ist, der sich ausgehend von der Vorderkante (31) der Schaufelspitze (33) arbeitsstromaufwärts über höchstens 75% einer Sehnenlänge (S) der Schaufelspitze erstreckt.

5. Arbeitsströmungskanalelement nach einem der vorhergehenden Ansprüche, **dadurch gekennzeichnet, dass** ein durchströmbarer Querschnitt des Rückströmungskanals (11) über einer Rückströmungskanallänge, insbesondere stetig, variiert.

6. Arbeitsströmungskanalelement nach dem vorhergehenden Anspruch, **dadurch gekennzeichnet, dass** der Rückströmungskanal (11) ausgehend von dem Einund/oder Austrittsquerschnitt (12, 13), insbesondere über wenigstens 1% und/oder höchstens 10% einer Rückströmungskanallänge, divergiert oder konvergiert.

7. Arbeitsströmungskanalelement nach einem der vorhergehenden Ansprüche, **dadurch gekennzeichnet, dass** eine Kanalwand (14A) des Rückströmungskanals (11) zwischen dem Ein- und Austrittsquerschnitt (12, 13) wenigstens eine lokale Erhebung und/oder Vertiefung aufweist.

8. Arbeitsströmungskanalelement nach einem der vorhergehenden Ansprüche, **dadurch gekennzeichnet, dass** der Rückströmungskanal (11) wenigstens abschnittsweise mehrere, insbesondere untereinander verbundene, Querstreben, insbesondere eine gitter- oder schwammartige Struktur (15), aufweist.

9. Arbeitsströmungskanalelement nach einem der vorhergehenden Ansprüche, **dadurch gekennzeichnet, dass** die Rückströmungskanalanordnung mehrere der, insbesondere miteinander über Querkanäle (16) kommunizierende, Rückströmungskanäle (11) aufweist.

10. Arbeitsströmungskanalelement nach einem der vorhergehenden Ansprüche, **dadurch gekennzeichnet, dass** es wenigstens abschnittsweise eine, insbesondere radial äußere, Arbeitsstromkanalwand (17) definiert.

11. Arbeitsströmungskanalelement nach einem der vorhergehenden Ansprüche, **dadurch gekennzeichnet, dass** es voll- oder teil-, insbesondere halbringartig ausgebildet ist.

12. Gasturbinenverdichter mit einem Arbeitsstromkanal (20), wenigstens einer drehbar gelagerten Laufschaufel (30), die in dem Arbeitsstromkanal (20) angeordnet ist, und wenigstens einem Arbeitsströmungskanalelement (10) nach einem der vorhergehenden Ansprüche.

13. Gasturbinenverdichter nach dem vorhergehenden Anspruch, **dadurch gekennzeichnet, dass** das Arbeitsströmungskanalelement (10), insbesondere lösbar oder dauerhaft, mit einem Gehäuse (40) des Gasturbinenverdichters verbunden ist.

14. Gasturbinenverdichter nach dem vorhergehenden Anspruch, **dadurch gekennzeichnet, dass** ein radialer Absatz zwischen einer arbeitsströmungskanalseitigen Oberfläche (17) des Arbeitsströmungskanalelements (10) und einer axial angrenzenden arbeitsströmungskanalseitigen Oberfläche (41) des Gehäuses (40) höchstens 0,1 mm beträgt.

15. Verfahren zum Herstellen eines Arbeitsströmungskanalelements (10) nach einem der vorhergehenden Ansprüche, **dadurch gekennzeichnet, dass** das Arbeitsströmungskanalelement mit der integral ausgebildeten Rückströmungskanalanordnung (11) generativ hergestellt wird.

## Geänderte Patentansprüche

### Geänderte Patentansprüche gemäss Regel 137(2) EPÜ.

1. Generativ hergestelltes Arbeitsströmungskanalelement (10) für einen Gasturbinenverdichter mit wenigstens einer drehbar gelagerten Laufschaufel (30), das eine integral ausgebildete Rückströmungskanalanordnung mit wenigstens einem Rückströmungskanal (11) mit einem arbeitsstromabwärtigen Eintrittsquerschnitt (12) und einem arbeitsstromaufwärtigen Austrittsquerschnitt (13) aufweist, wobei ein Wandabstand (d) des Rückströmungskanals (11) höchstens 2 mm beträgt.

2. Arbeitsströmungskanalelement nach dem vorhergehenden Anspruch, **dadurch gekennzeichnet, dass** der Eintrittsquerschnitt (12) zwischen einer Vorder- und einer Hinterkante (31, 32) einer Schaufelspitze (33) der Laufschaufel (30) angeordnet ist.

3. Arbeitsströmungskanalelement nach einem der vorhergehenden Ansprüche, **dadurch gekennzeichnet, dass** ein Wandabstand (d) des Rückströmungskanals wenigstens 0,5 mm beträgt.

4. Arbeitsströmungskanalelement nach einem der vorhergehenden Ansprüche, **dadurch gekennzeichnet, dass** der Eintrittsquerschnitt (12) in einem Axialbereich angeordnet ist, der sich ausgehend von der Vorderkante (31) der Schaufelspitze (33) arbeitsstromabwärts über höchstens 75% einer Sehnenlänge (S) der Schaufelspitze erstreckt.

5. Arbeitsströmungskanalelement nach einem der vorhergehenden Ansprüche, **dadurch gekennzeichnet, dass** der Austrittsquerschnitt (13) in einem Axialbereich angeordnet ist, der sich ausgehend von der Vorderkante (31) der Schaufelspitze (33) arbeitsstromaufwärts über höchstens 75% einer Sehnenlänge (S) der Schaufelspitze erstreckt.

6. Arbeitsströmungskanalelement nach einem der vorhergehenden Ansprüche, **dadurch gekennzeichnet, dass** ein durchströmbarer Querschnitt des Rückströmungskanals (11) über einer Rückströmungskanallänge, insbesondere stetig, varriert.

7. Arbeitsströmungskanalelement nach dem vorhergehenden Anspruch, **dadurch gekennzeichnet, dass** der Rückströmungskanal (11) ausgehend von dem Ein- und/oder Austrittsquerschnitt (12, 13), insbesondere über wenigstens 1% und/oder höchstens 10% einer Rückströmungskanallänge, divergiert oder konvergiert.

8. Arbeitsströmungskanalelement nach einem der vorhergehenden Ansprüche, **dadurch gekennzeichnet, dass** eine Kanalwand (14A) des Rückströmungskanals (11) zwischen dem Ein- und Austrittsquerschnitt (12, 13) wenigstens eine lokale Erhebung und/oder Vertiefung aufweist.

9. Arbeitsströmungskanalelement nach einem der vorhergehenden Ansprüche, **dadurch gekennzeichnet, dass** der Rückströmungskanal (11) wenigstens abschnittsweise mehrere, insbesondere untereinander verbundene, Querstreben, insbesondere eine gitter- oder schwammartige Struktur (15), aufweist.

10. Arbeitsströmungskanalelement nach einem der vorhergehenden Ansprüche, **dadurch gekennzeichnet, dass** die Rückströmungskanalanordnung mehrere der, insbesondere miteinander über Querkanäle (16) kommunizierende, Rückströmungskanäle (11) aufweist.

11. Arbeitsströmungskanalelement nach einem der vorhergehenden Ansprüche, **dadurch gekennzeichnet, dass** es wenigstens abschnittsweise eine, insbesondere radial äußere, Arbeitsstromkanalwand (17) definiert.

12. Arbeitsströmungskanalelement nach einem der vorhergehenden Ansprüche, **dadurch gekennzeichnet, dass** es voll- oder teil-, insbesondere halbringartig ausgebildet ist.

13. Gasturbinenverdichter mit einem Arbeitsstromkanal (20), wenigstens einer drehbar gelagerten Laufschaufel (30), die in dem Arbeitsstromkanal (20) angeordnet ist, und wenigstens einem Arbeitsströmungskanalelement (10) nach einem der vorhergehenden Ansprüche.

14. Gasturbinenverdichter nach dem vorhergehenden Anspruch, **dadurch gekennzeichnet, dass** das Arbeitsströmungskanalelement (10), insbesondere lösbar oder dauerhaft, mit einem Gehäuse (40) des Gasturbinenverdichters verbunden ist.

15. Gasturbinenverdichter nach dem vorhergehenden Anspruch, **dadurch gekennzeichnet, dass** ein radialer Absatz zwischen einer arbeitsströmungskanalseitigen Oberfläche (17) des Arbeitsströmungskanalelements (10) und einer axial angrenzenden arbeitsströmungskanalseitigen Oberfläche (41) des Gehäuses (40) höchstens 0,1 mm beträgt.

16. Verfahren zum Herstellen eines Arbeitsströmungskanalelements (10) nach einem der vorhergehenden Ansprüche, **dadurch gekennzeichnet, dass** das Arbeitsströmmigskanalelement mit der integral ausgebildeten Rückströmungskanalanordnung (11) generativ hergestellt wird.
